Europäisches Patentamt

(19) European Patent Office

Office européen des brevets

(11) Publication number: **0 292 718 B1**

# EUROPEAN PATENT SPECIFICATION

(12)

(45) Date of publication of patent specification :
31.07.91 Bulletin 91/31

(51) Int. Cl.⁵ : **G01L 1/12**

(21) Application number : 88106754.0

(22) Date of filing : 27.04.88

(54) Magnetoelastic force transducer.

(30) Priority : 30.04.87 SE 8701806

(43) Date of publication of application :
30.11.88 Bulletin 88/48

(45) Publication of the grant of the patent :
31.07.91 Bulletin 91/31

(84) Designated Contracting States :
DE FR GB IT

(56) References cited :
EP-A- 0 089 916
EP-A- 0 142 110
SE-B- 405 766
SE-C- 151 267
SU-A- 1 030 675
US-A- 1 906 551

(73) Proprietor : ASEA BROWN BOVERI AB
S-721 83 Västeras (SE)

(72) Inventor : Sobel, Jarl
Siggesborgsgatan 5 D
S-722 26 Västeras (SV)
Inventor : Örnholmer, Lars
Termometergatan 33
S-723 48 Västeras (SV)

(74) Representative : Boecker, Joachim, Dr.-Ing.
Rathenauplatz 2-8
W-6000 Frankfurt a.M. 1 (DE)

## Description

The invention relates to a magnetoelastic force transducer according to the precharacterising part of Claim 1.

Magnetoelastic transducers in general are widely used within modern engineering and other areas where there is a need for force measurement. Characteristic of a transducer to which the invention relates is that it exhibits a high sensitivity and is provided with special means for zero signal compensation.

Magnetoelastic force transducers are previously known, for example from SE-C-151267. Such a transducer comprises a force-subjectable magnetic core which is built up of magnetoelastic sheets and is provided with four through-holes for two windings arranged with their planes perpendicular to each other, one of these windings being an excitation winding supplied from an a.c. source for generating a magnetic flux in the core, the other winding being a measuring winding for sensing the magnitude of the magnetic flux linked with the measuring winding. The magnitude of this flux is dependent on the magnitude of the external force applied on the core.

Transducers of the above kind often suffer from linearity and zero voltage problems. The linearity can be improved by constructing the transducer with two measuring portions, for example in accordance with SE-B-405766 (DE-A-2756701), one of these measuring portions being substantially subjected to tensile stress and the other being subjected to compressive stress, both stresses proportional to the external force. A good linearity can then be achieved by summing the signals from the respective measuring portion in suitable portions.

The zero voltage of the transducer is caused by internal stresses and crystal orientation in the sheet material, which have arisen, inter alia, during the manufacturing processes, for example during rolling of the material.

EP-B-0089916 discloses an embodiment of a magnetoelastic transducer having a specially formed sheet section with a measuring portion formed as a doubly-bent beam. This transducer exhibits extremely good linearity and low zero voltage values.

In many applications nowadays it is a requirement that the output signal of the transducer should be zero at zero applied force. For reasons of security it is often also required that the residual zero voltage must not be electrically compensated for, since the appearance of a residual zero voltage in the event of an electricity supply failing may have serious consequences.

In connection with the manufacture of transducers, it is greatly desired that they should be simple to manufacture without too high a degree of precision.

SE-A-8605377-4 describes a magnetoelastic transducer comprising two identical cylindrical bodies. Extending from one circular end surface, a first axial centre hole is provided with an axial depth somewhat shorter than the length of the cylindrical body. A second axial central hole having a diameter smaller than that of the first axial centre hole has been provided in the remaining central part of the cylindrical body. The latter hole is provided with internal threads.

Extending from the second circular end surface of the cylindrical body, a concentric, tubular space has been provided which has an axial length somewhat shorter than the length of the body. The inner diameter of the tubular space is so adapted that a thin cylindrical tubular wall is formed between this space and the first made centre hole.

The two identical, cylindrical bodies are connected together with their second end surfaces in such a way that the tubular spaces are confronting each other. The connection is performed by means of a stud bolt with a shank diameter adapted to provide clearance in the respective first axial centre hole and with the threaded bolt portion adapted to the threads of the smaller, second threaded axial centre hole. The shaft of the stud bolt has such a length that it protrudes somewhat beyond the respective first circular end surface of the assembled transducer.

In the enclosed annular space that is formed when the two cylindrical bodies are connected together, there is placed a bobbin, the inner diameter of which is dimensioned to fit against the outer diameter of the thin cylindrical tubular wall and the axial length of which corresponds to the entire axial length of the tubular space. The bobbin is provided with two measuring windings wound on the bobbin in such a way that each of the measuring windings is located, in the axial direction, outside the thin cylindrical tubular wall in each of the two assembled cylindrical bodies. The bobbin is also provided with an excitation winding disposed on the outside of the measuring winding and extending over the entire axial length of the bobbin.

The measuring windings are electrically connected oppositely in series, which means that the voltages induced in the windings by the alternating magnetic flux in the core oppose each other, the total output voltage of the series-connection being approximately zero when no force is applied.

By placing the transducer with one first circular end surface on a fixed base and applying the force which is to be measured to the shank of the stud bolt protruding from the opposite first circular end surface, a compressive stress is obtained in the thin cylindrical tubular wall which is positioned nearest to the base, and a tensile stress is obtained in the thin cylindrical tubular wall which faces the force-applying side. This influences the magnetoelastic conditions in a known manner for magnetoelastic transducers, and a signal proportional to the applied force can be obtained from the oppositely series-connected measuring windings.

The transducer can be adapted in a very simple way for measuring tensile forces. This can be made, for example, by providing the stud bolt with a loop or the like.

A magnetoelastic transducer according to the above will, with a fair probability, exhibit a certain residual voltage at zero applied force. Because of the design of the transducer core there are several possibilities for a mechanical balancing and compensation of the zero signal. Two different devices are clear from SE-A-8605378-2 (EP-A-0271832). One of these comprises giving that bobbin which supports the windings an axial length shorter than the axial length of the tubular space. With the aid of adjusting screws inserted in diametrically and concentrically disposed threaded holes in the circular end surfaces of the transducer, the bobbin can be moved, adjusted and fixed in the axial direction inside the transducer, so that a possible zero signal can be compensated for. Such an adjustment is generally sufficient.

By providing the first axial hole with threads and by placing in that hole which faces the fixed base a coil spring or cup springs, the bias of which can be influenced by an adjusting screw having threads adapted to the threads of the hole, a suitable action of a force on the transducer can be obtained by biasing the spring, which counteracts any residual zero signal. Since the path of the elastic deformation of the spring is much longer than the compression of the transducer caused by the measuring load, the spring force will be changed only to a negligible extent when the transducer is loaded, that is to say, the transducer is loaded with a substantially constant force from the coil spring.

Although the above two methods are simple and reliable, the calibration of the force transducer is liable to changes due to settling in the adjusting of the adjusting screw, aging of the spring properties due to temperature and great load variations, and so on.

The invention aims at the development of a magnetoelastic force transducer of the above-mentioned kind which is superior to the previous force transducers with respect to its sensitivity and the suppression of the zero signal while at the same time its manufacture is easy and inexpensive.

To achieve this aim the invention suggests a magnetoelastic force transducer according to Claim 1.

Further developments of the invention are characterized by the features of the additional claims.

Thus the zero compensation is achieved by placing between the two cylindrical and identical bodies, a thin asymmetrical centre pole in the form of a punched disc of a soft-magnetic material having the same outer diameter as that of the two cylindrical bodies. The asymmetry is created by gluing, on one side of the centre pole, a considerably thinner soft-magnetic foil, whereby different dimensions of the foil produce different degrees of asymmetry.

When using a symmetrical center pole in the form of only a disc of soft-magnetic material, a magnetic field will arise which is symmetrical with respect to an imaginary plane in the centre of the disc, parallel to the outer sides of the disc. Because of field displacement, caused by eddy currents, the symmetrical magnetic field is greatest at the surfaces of the disc and decreases exponentially inwards towards the imaginary mid-plane.

By gluing a thin soft-magnetic foil on one side of the disc, the symmetrical field configuration will be changed such that, totally seen, an asymmetry is generated. This is achieved because the foil is thinner than the so-called magnetic depth of penetration.

Because of the new magnetic flow paths which arise when using a centre pole, cylindrical force transducers according to the described design will exhibit a greatly enhanced sensitivity. However, with only one magnetic centre pole and without the asymmetry described, which arises as a result of the conducting foil, the zero signal may amount to the same order of magnitude as the sensitivity (volts/turn of measuring winding).

The design with an asymmetrical centre pole permits a method of production which is both rational and inexpensive, since the punching of the centre pole can be made after the conducting foil has been glued onto the centre pole.

A centre pole of the described type entails that the bobbin has to be divided, which can be considered a disadvantage both from the point of view of manufacturing and from the point of view of mounting. However, the invention also comprises an embodiment of the device in which an undivided bobbin may be used. The bobbin is then formed with a central waist portion and the centre pole with a slot which is adapted to the waist portion. This allows the centre pole to be laterally inserted into the central part of the bobbin.

The invention will now be described in greater detail with reference to the accompanying drawings showing — by way of example — in

Figure 1      a force transducer according to the invention having an asymmetrical centre pole,
Figure 2      the elastic coupling of the excitation windings included in the transducer,

| Figure 3 | the field displacement in a centre pole consisting solely of one disc, |
| Figure 4 | the field configuration in an asymmetrical centre pole, |
| Figure 5 | a bobbin constructed according to a preferred embodiment of the invention, |
| Figure 6 | a centre pole according to the invention intended for the preferred embodiment of the bobbin according to Figure 3. |

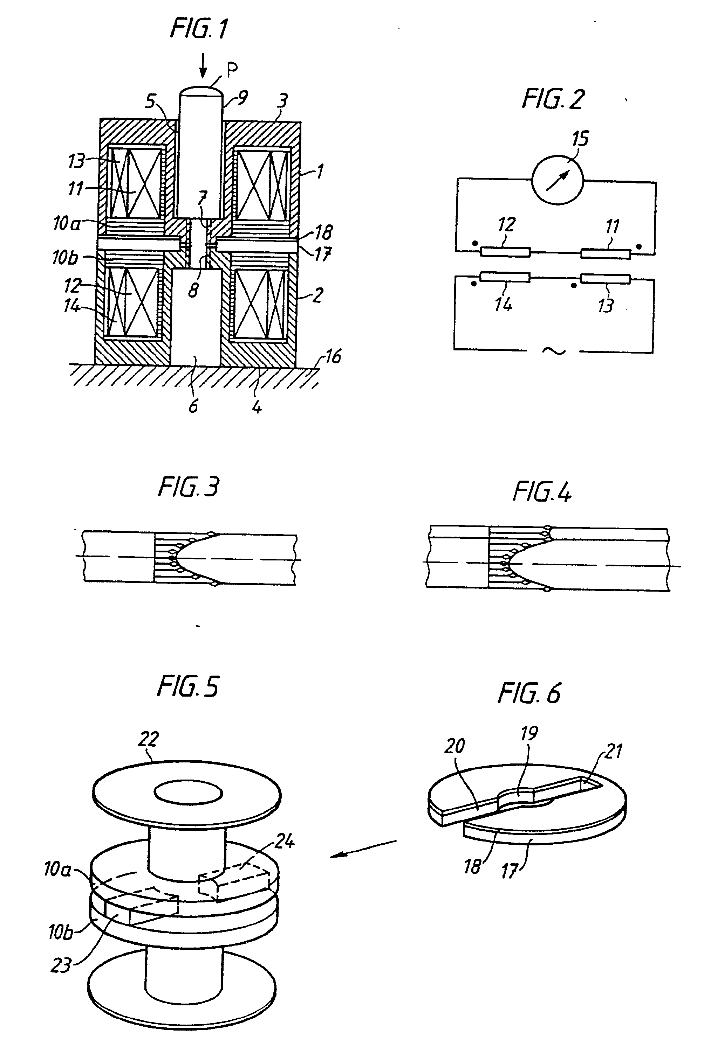

Figure 1 shows a magnetoelastic force transducer which for the most part corresponds to the force transducer according to SE-A-8605377-4. It comprises the same cylindrical, identical bodies 1 and 2. In the two outer outwardly-directed end surfaces 3 and 4 of the bodies 1, 2, first holes 5 and 6 are provided centrally and axially, the axial length of these holes being somewhat shorter than the axial length of the respective body. In the remaining central part of the bodies 1, 2, second threaded holes 7 and 8 are axially provided. The two bodies 1, 2 are held together by a stud bolt 9. The stud bolt 9 comprises a shank portion adapted to be inserted with clearance into one of said first central holes 5,6, and a threaded portion intended for screwing together the two bodies via the second threaded holes 7 and 8. A force is intended to be applied at the protruding end P of the stud bolt 9. In each one of the identical bodies 1, 2, extending from the confronting end surfaces thereof, there is provided an inner axially and concentrically tubular space for a bobbin consisting of two bobbin halves 10a and 10b, on each of which are wound a measuring winding 11 and 12 respectively, and an excitation winding 13 and 14 respectively. The windings are electrically coupled together according to Figure 2, which shows that the two excitation windings 13, 14 are series-connected and the two measuring windings 11, 12 are connected oppositely in series. The measurement signal can, in principle, be shown on an instrument 15. The force transducer rests on a base 16 according to Figure 1.

According to the invention, an asymmetrical centre pole is arranged between the two cylindrical bodies 1, 2. The centre pole consists of a disc 17 of a soft-magnetic sheet material and a thin layer 18 of a magnetically conducting foil glued onto the disc 17 with an electrically insulating glue. For the sake of clarity, the centre pole has been drawn with considerably greater thickness than what is needed and is appropriate. The thickness of the disc 17 is in practice of the order of magnitude of 1/4 mm and the thickness of the foil is of the order of magnitude of 100 μm (micrometer). However, to ensure a firm grip of the disc between the two bodies 1 and 2, the thickness of the disc is preferably somewhat larger than the sum of the two protruding central portions of the two bodies surrounding the stud bolt so that the two bodies 1, 2 have no immediate contact with each other.

Figure 3 shows how the above-mentioned field displacement in a disc of the centre pole provides a symmetrical field configuration with respect to an imaginary centre plane.

Figure 4 shows the asymmetrical field configuration which arises when a thin foil of a soft-magnetic material is glued onto one side of the disc 17.

In one embodiment of the invention, the centre pole according to Figure 1 consists of a disc with only one centre hole for the continuous threaded part of the stud bolt. This means that the bobbin has to be divided into an upper and a lower bobbin half. From a purely technical point of view this does not involve any major problems and drawbacks. From a purely practical point of view, however, it involves more parts, more coupling operations, etc.

In a preferred embodiment, therefore, a bobbin according to Figure 5 and a centre pole according to Figure 6 are used. As will have been clear from the above, the centre pole consists of a circular disc 17 with a glued-on foil layer 18, the disk having an outer diameter corresponding to the outer diameter of the two identical cylindrical bodies 1 and 2. The disc 17 is provided with a centre opening 19 to provide clearance against the threaded part of the stud bolt 9. In addition, the centre pole in this embodiment is provided with a diametrical slot 20 which divides it into two equal halves, which are held together by that part 21 of the centre pole which remains in the extension of the slot 20, the dimension of this part 21 corresponding to the thickness of the outer cylindrical tubular wall.

The bobbin 22 according to Figure 5 is, in external appearance, formed as the bobbin in the described SE-A-8605377-4. Thus, a whole bobbin, comprising the two bobbin halves 10a and 10b in Figure 1, is the starting-point. In the central part of the bobbin, an amount of material corresponding to the centre pole according to Figure 6 is milled out or sawn off. This means that between the two bobbin halves there will be a waist portion keeping these halves together, consisting of two diametrical bars 23 and 24. These bars have a rectangular cross section with a height in the axial direction of the bobbin which is equal to the thickness of the centre pole and with a width equal to the width of the slot 20.

A force transducer according to the invention with a centre pole may, of course, be supplemented with the mechanical neutral point adjustments previously mentioned. By making the bobbin somewhat shorter than the inner tubular space and providing the end surfaces with threaded holes for adjusting screws, the bobbin can be moved, adjusted and fixed in the axial direction inside the transducer so that any residual zero voltage will be compensated for.

A residual zero voltage after a centre pole adjustment can finally be adjusted to zero by suitable biasing of a spring in the first axial hole, provided with threads and an adjusting screw, in that one of the two identical, cylindrical bodies which faces the base.

## Claims

1. A magnetoelastic force transducer comprising a closed core of a solid magnetoelastic material provided with two excitation windings (13, 14) which are supplied with alternating current, and two measuring windings (11, 12), the closed core consisting of two centrally and axially screwed-together, identical cylindrical bodies (1, 2), at the outwardly-directed end surfaces (3, 4) of each of these bodies a first hole (5, 6) is provided centrally and axially, the axial depth of these holes being shorter than the axial length of the respective body, a second threaded hole (7, 8) is provided axially in each of the remaining central parts of the two bodies, a stud bolt (9), adapted to provide clearance against the wall of said first holes (5, 6) is inserted into one (3) of the first holes and is provided with an end portion formed as a screw having corresponding threads as the second holes provided in the bodies, axially and concentrically tubular spaces are provided in said bodies these spaces accommodating bobbin halves (10a, 10b) on which measuring (11, 12) and excitation windings (13, 14) are wound, between the two identical bodies an asymmetrical centre pole is arranged provided with a centre opening (19) and consisting of a preferably circular disc (17) of soft-magnetic material with a layer (18) of soft-magnetic material attached to the disc such that it is substantially electrically insulated against the disc (17).

2. Magnetoelastic force transducer according to Claim 1, wherein said layer (18) consists of a foil (18) glued onto the disc (17).

3. Magnetoelastic force transducer according to Claim 1, wherein the bobbin halves are held together by a waist portion (23, 24) and that the centre pole is provided with a diametrically extending slot (20) adapted to be placed around said waist portion.

4. Magnetoelastic force transducer according to Claim 1 or 2, wherein the bobbin halves are divided into two separate bobbins and that the centre pole consists of a whole circular disc.

## Patentansprüche

1. Magnetoelastischer Kraftmeßgeber mit einem geschlossenen Kern aus stabilem magnetoelastischem Material, welcher Kern mit zwei mit Wechselstrom gespeisten Erregerwicklungen (13, 14) und mit zwei Meßwicklungen (11, 12) ausgerüstet ist, wobei der geschlossene Kern aus zwei zentral und in axialer Richtung zusammengeschraubten identischen zylindrischen Körpern (1, 2) besteht, mit je einem ersten zentral und axial angeordneten Loch (5, 6) an der nach außen gerichteten Stirnfläche (3, 4) jedes dieser Körper, wobei die axiale Tiefe dieser Löcher geringer ist als die axiale Länge des entsprechenden Körpers, mit je einem zweiten, mit Gewinde versehenen, axial verlaufendes Loch (7, 8) in jedem der verbleibenden zentralen Teile der beiden Körper, mit einem Stiftbolzen (9), welcher so bemessen ist, daß er mit Spiel gegenüber der Wand der genannten ersten Löcher (5, 6) in eines (5) dieser ersten Löcher eingeführt ist und der einen als Schraube ausgebildeten Endabschnitt hat, welcher dem Gewinde im zweiten Loch in den Körpern angepaßt ist, mit axialen und konzentrischen rohrförmigen Räumen in den genannten Körpern, in welchen Räumen Spulenkörperhälften (10a, 10b) untergebracht sind, auf denen die Meßwicklungen (11, 12) und die Erregerwicklungen (13, 14) gewickelt sind, und mit einem asymmetrischen zentralen Pol zwischen den beiden identischen Körpern, der mit einer zentralen Öffnung (19) versehen ist und aus einer vorzugsweise kreisförmigen Scheibe (17) aus weichmagnetischem Material und einer darauf befindlichen Schicht (18) aus weichmagnetischem Material besteht, die derart auf der Scheibe befestigt ist, daß sie gegenüber der Scheibe (17) im wesentlichen elektrisch isoliert ist.

2. Magnetoelastischer Kraftmeßgeber nach Anspruch 1, wobei die genannte Schicht (18) aus einer Folie (18) besteht, die auf die Scheibe (17) geklebt ist.

3. Magnetoelastischer Kraftmeßgeber nach Anspruch 1, wobei die Spulenkörperhälften durch ein verengtes Teil (23, 24) zusammen gehalten werden und der zentrale Pol mit einem sich diametral erstreckenden Schlitz (20) versehen ist, der so bemessen ist, daß er sich um das verengtes Teil anbringen läßt.

4. Magnetoelastischer Kraftmeßgeber nach Anspruch 1 oder 2, wobei die Spulenkörperhälften in zwei separate Spulenkörper unterteilt sind und der zentrale Pol aus einer vollständigen Kreisscheibe besteht.

**Revendications**

1. Un transducteur de force magnétoélastique comprenant un circuit magnétique fermé constitué par un matériau magnétoélastique plein équipé de deux enroulements d'excitation (13, 14) qui sont alimentés en courant alternatif, et deux enroulements de mesure (11, 12), le circuit magnétique fermé étant constitué par deux corps cylindriques identiques (1, 2) vissés ensemble de façon centrale et axiale, dans lequel un premier trou (5, 6) est formé en position centrale et axiale dans les surfaces d'extrémités dirigées vers l'extérieur (3, 4) de chacun de ces corps, la profondeur axiale de ces trous étant inférieure à la longueur axiale du corps respectif, un second trou taraudé (7, 8) est formé en position axiale dans chacune des parties centrales restante des deux corps, un goujon (9), dimensionné de façon à établir un dégagement vis-à-vis de la paroi des premiers trous (5, 6) est introduit dans l'un (3) des premiers trous, et il comporte une partie d'extrémité se présentant sous la forme d'une vis qui porte un filetage correspond à celui des seconds trous qui sont formés dans les corps, des espaces tubulaires axiaux et concentriques sont formés dans les corps, et ces espaces logent des moitiés de mandrin (10a, 10b) sur lesquelles sont bobinés des enroulements de mesure (11, 12) et d'excitation (13, 14), un pôle central dissymétrique est disposé entre les deux corps identiques et il comporte une ouverture centrale (19) et consiste en un disque (17) de préférence circulaire, en un matériau magnétique doux, avec une couche (18) de matériau magnétique doux fixée sur le disque de façon à être pratiquement électriquement isolée du disque (17).

2. Transducteur de force magnétoélastique selon la revendication 1, dans lequel la couche (18) consiste en une pellicule (18) qui est collée sur le disque (17).

3. Transducteur de force magnétoélastique selon la revendication 1, dans lequel les moitiés de mandrin sont maintenues ensemble par une partie évidée (23, 24), et le pôle central comporte une encoche (20) s'étendant en direction diamétrale qui est prévue pour être placée autour de la partie évidée.

4. Transducteur de force magnétoélastique selon la revendication 1 ou 2, dans lequel les moitiés de mandrin sont divisées en deux mandrins séparés, et le pôle central consiste en un disque circulaire entier.

FIG.1

FIG.2

FIG.3

FIG.4

FIG.5

FIG.6